# EUROPEAN PATENT APPLICATION

(11) **EP 2 267 864 A2**
(43) Date of publication of application: **29.12.2010**
(21) Application number: 10006474.0
(22) Date of filing: 22.06.2010
(51) Int. Cl.: H02J 7/02

(54) **Non-contact charger with an indicator**

(30) Priority: 25.06.2009 JP 2009150997
(71) Applicant: Panasonic Electric Works Co., Ltd., Kadoma-shi Osaka 571-8686 (JP)
(72) Inventor: Katsura, Yoshinori, Kadoma-shi Osaka 571-8686 (JP)
(74) Representative: Schatt, Markus F.

(57) **Abstract**

A non-contact charger (11) includes a primary coil (30) that transmits power in a non-contact manner to a load device (12) through electromagnetic induction with a secondary coil (41) of the load device when charging the load device, a charger body (21) including the primary coil, and an information notification block (22) fixed to the charger body. The information notification block includes a notification element (35) that notifies a user of information of at least one of the charger body and the load device, and an auxiliary coil (33) connected to the notification element. The information notification block uses power transmitted in a non-contact manner through electromagnetic induction between the primary coil and the auxiliary coil to activate the notification element to provide notification of the information of at least one of the charger body and the load device.

## Description

This application is based upon and claims the benefit of priority from prior Japanese Patent Application No. 2009-150997, filed on June 25, 2009, the entire contents of which are incorporated herein by reference.

The present invention relates to a non-contact charger for charging a rechargeable battery of a load device such as an electric toothbrush handle portion.

A conventional non-contact charger transmits power in a non-contact manner through electromagnetic induction that occurs between a primary coil of a non-contact charger and a secondary coil of a load device. The non-contact charger uses a pickup coil to retrieve high-frequency power generated by leakage magnetic flux that occurs between the primary coil and the secondary coil. Then, the non-contact charger uses the power as a power supply to illuminate a light emitting diode (for example, refer to Japanese Laid-Open Patent Publication No. 9-298847). More specifically, the non-contact charger converts the high-frequency power, which is retrieved by the pickup coil and corresponds to the leakage magnetic flux, into DC voltage. Then, the non-contact charger feeds back the converted DC voltage to a DC voltage source of a primary circuit and illuminates the light emitting diode with the DC voltage that corresponds to the leakage magnetic flux. Illuminating the light emitting diode notifies a user that the load device is being charged.

In such a non-contact charger, a notification element such as the light emitting diode is arranged in the primary circuit, that is a circuit connecting the primary coil with a conductor. However, to prevent the user from receiving an electrical shock, the light emitting diode must be arranged in a rearward part of a case for the non-contact charger to provide an insulation distance between the primary circuit and the outer surface of the case. This enlarges the case, which, in turn, enlarges the non-contact charger.

Further, the light-emitting diode is arranged in the primary circuit. Thus, for example, when a top-end model includes the charging notification light emitting diode and a low-end model does not, each model would require a dedicated electrical circuit and case. This would increase the manufacturing cost.

The present invention provides a non-contact charger that avoids enlargement and reduces manufacturing costs.

One aspect of the present invention is a non-contact charger including a primary coil that transmits power in a non-contact manner to a load device through electromagnetic induction performed with a secondary coil of the load device when charging the load device, a charger body including the primary coil, and an information notification block fixed to the charger body. The information notification block includes a notification element that notifies a user of information of at least one of the charger body and the load device. An auxiliary coil that is included in the information notification block is connected to the notification element. The information notification block uses power transmitted in a non-contact manner through electromagnetic induction between the primary coil and the auxiliary coil to activate the notification element to provide notification of the information of at least one of the charger body and the load device.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic side view showing one embodiment of an electric toothbrush according to the present invention;
Fig. 2 is an exploded schematic side view showing the electric toothbrush of Fig. 1;
Fig. 3 is a circuit diagram of the electric toothbrush of Fig. 1;
Fig. 4 is a circuit diagram of a first modification of the electric toothbrush;
Fig. 5 is a circuit diagram of a second modification of the electric toothbrush;
Fig. 6 is a circuit diagram of a third modification of the electric toothbrush; and
Fig. 7 is a circuit diagram of a fourth modification of the electric toothbrush.

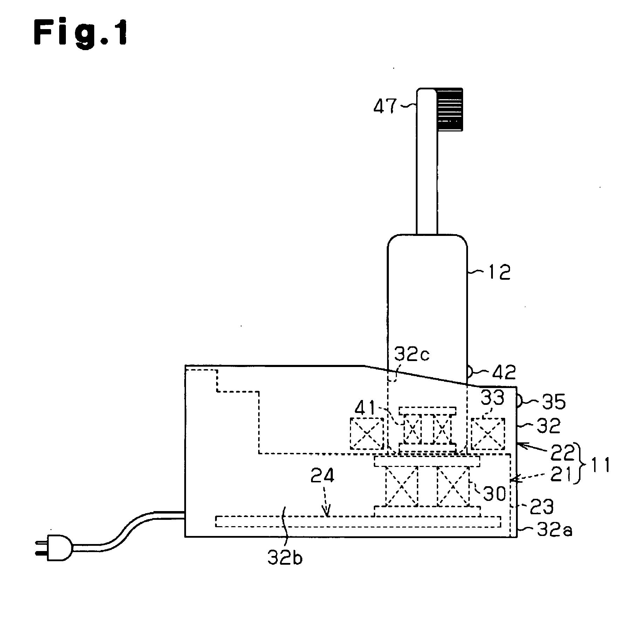

A non-contact charger according to one embodiment of the present invention will now be discussed with reference to Figs. 1 to 3.

As shown in Figs. 1 to 3, an electric toothbrush, which serves as a chargeable electric system, includes a non-contact charger 11 and an electric toothbrush handle portion 12, which serves as a load device. The non-contact charger 11 includes a charger body 21 and an information notification block 22, which is fixed to the charger body 21.

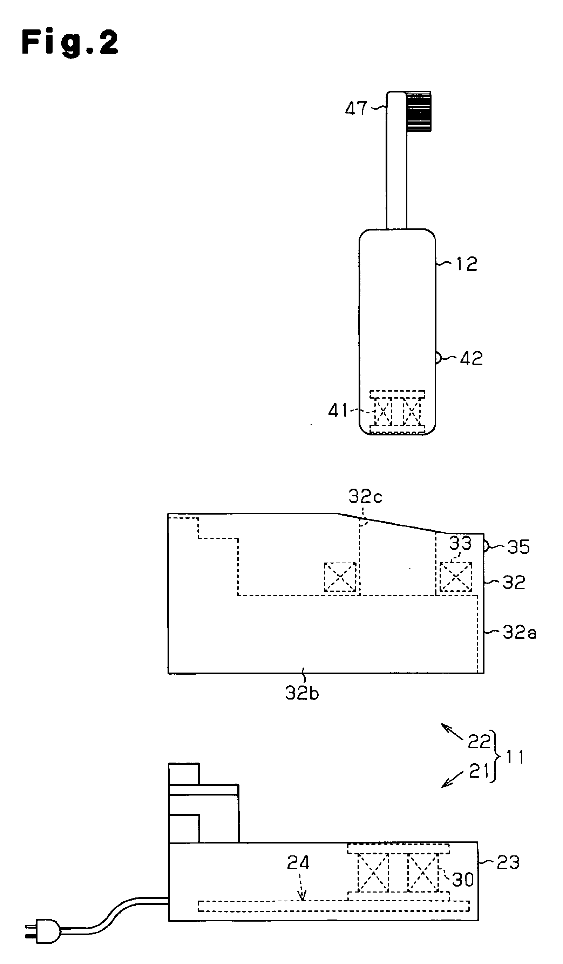

Referring to Fig. 2, the charger body 21 includes a body case 23 and a primary circuit 24, which is accommodated in the body case 23. In the illustrated example, the body case 23 is formed from a resin and has the shape of a thin box. The primary circuit 24 is laid out on a substrate, which is held on a planar inner surface of the body case 23. The interior of the body case 23 is filled with a potting resin serving as a water resistant structure.

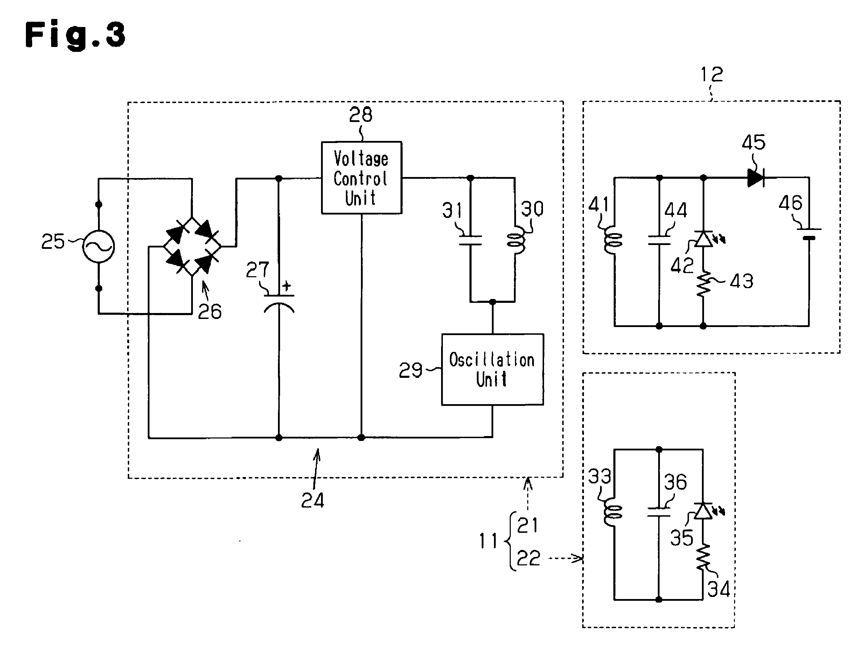

Referring to Fig. 3, the primary circuit 24 includes a bridge rectification circuit 26, which is formed by four diodes and connected to an external AC power supply 25, and a smoothing capacitor 27, which smoothes the output of the bridge rectification circuit 26. The primary circuit 24 further includes a voltage control unit 28 and an oscillation unit 29. The voltage control unit 28 controls DC output voltage at a predetermined constant voltage value (e.g., 100 V) irrelevant of the value of the voltage from the bridge rectification circuit 26 (voltage value of the external AC power supply 25). The oscillation unit 29 converts the output voltage from the voltage control unit 28 to a high-frequency voltage having a predetermined frequency (e.g., 50 kHz). The primary circuit 24 also includes a primary coil (a first induction coil) 30 and a resonance capacitor 31
The primary coil 30 generates magnetic field lines with the high-frequency voltage. The resonance capacitor 31 is connected in parallel to the primary coil 30.

Referring to Figs. 2 and 3, the information notification block 22 includes an information notification case 32 (refer to Fig. 2), which is formed from a resin, an auxiliary coil 33 (refer to Figs. 2 and 3), a resistor 34 (refer to Fig. 3), a light emitting diode 35 (refer to Figs. 2 and 3), and a resonance capacitor 36 (refer to Fig. 3). The auxiliary coil 33 is held in the information notification case 32. The light emitting diode 35 is one example of a notification element and a light emitting element.

Referring to Figs. 1 and 2, the information notification case 32 is formed to be arrangeable on the charger body 21 (body case 23). The information notification case 32 includes covers 32a and 33b, which cover at least three surfaces of the charger body 21 (the body case 23) facing different directions. In the present embodiment, the covers 32a and 32b cover the front and the two sides of the charger body 21 (the body case 23). The information notification case 32 is formed to cover an upper surface of the charger body 21 (the body case 23) excluding a portion corresponding to the primary coil 30. A holder is formed in the information notification case 32 at a location corresponding to the primary coil 30. In the illustrated example, the holder is defined by the wall of a holding socket 32c, which extends vertically through the information notification case 32. The wall of the holding socket 32c is formed in conformance with the profile of a basal portion of the electric toothbrush handle portion 12 and cooperates with the upper surface of the body case 23 to hold the electric toothbrush handle portion 12 when inserted therein. Further, referring to Figs. 1 and 2, the auxiliary coil 33 is arranged in the vicinity of the primary coil 30 along (outside) the wall of the holding socket 32c.

Referring to Fig. 3, the auxiliary coil 33 is connected via the resistor 34 to an anode side of the light emitting diode 35. Further, the auxiliary coil 33 is connected in parallel to the resonance capacitor 36. As shown in Figs. 1 and 2, the light emitting diode 35 has a light emitting portion exposed from the front of the information notification case 32.

In the non-contact charger 11, when the charger body 21 is activated (state connected to the external AC power supply 25), electromagnetic inductance occurs between the primary coil 30 and the auxiliary coil 33 and transmits power in a non-contact manner. The power is used as a power supply that illuminates the light emitting diode 35 to notify a user of information indicating the activation state regardless of whether or not power is being transmitted to the electric toothbrush handle portion 12. Unlike the charger body 21, the information notification block 22 is not connected to the external AC power supply 25 and there is no possibility of the user receiving an electrical shock. Thus, the information notification case 32 is not filled with a potting resin that serves as a water resistant structure. The information notification case 32 has a simple water resistant structure, which is obtained just by eliminating large openings from its outer surface.

Referring to Figs 2 and 3, the electric toothbrush handle portion 12, which has an overall rod-shape, includes a secondary coil (a second induction coil) 41 (refer to Figs. 2 and 3), a light emitting diode 42 (refer to Figs. 2 and 3), a resistor 43 (refer to Fig. 3), a resonance capacitor 44 (refer to Fig. 3), a rectification diode 45, and a rechargeable battery 46 (refer to Fig. 3). As shown in Figs. 1 and 2, the secondary coil 41 is arranged in the basal portion of the electric toothbrush handle portion 12 in correspondence with the primary coil 30.

As shown in Fig. 3, the secondary coil 41 is connected via the resistor 43 to the anode side of the light emitting diode 42. Further, the secondary coil 41 is connected in parallel to the resonance capacitor 44 and connected via the rectification diode 45 to the rechargeable battery 46. The rechargeable battery 46 is connected to a drive circuit (not shown). When a switch (not shown) arranged on the electric toothbrush handle portion 12 is operated, drive voltage is supplied to a motor (not shown), which drives a toothbrush portion 47 (refer to Figs. 1 and 2).

When the basal portion of the electric toothbrush handle portion 12 is inserted into and held in the holding socket 32c as shown in the state of Fig. 1, electromagnetic induction occurs between the primary coil 30 and the secondary coil 41 in a non-contact manner. This transmits power toward the secondary coil 41 and charges the rechargeable battery 46. Further, the light emitting diode 42 is illuminated to notify the user of information indicating that charging is being performed.

The primary circuit 24, which includes the primary coil 30, may be referred to as a charger body electrical circuit. The electrical circuit accommodated in the electric toothbrush handle portion 12 and including the secondary coil 41 and the rechargeable battery 46, which are connected to each other by a conductor, may be referred to as a load device electrical circuit. The electrical circuit accommodated in the information notification block 22 and including the auxiliary coil 33 and the notification element (light emitting diode 35), which are connected to each other by a conductor, may be referred to as an information notification block electrical circuit.
The information notification block electrical circuit is not connected by a power transmission conductor to both of the charger body electrical circuit and the load device electrical circuit. In the illustrated embodiment, the external AC power supply 25 is connected to the charger body 21 via a power cable but the information notification block 22 does not have a contact or a power cable electrically connectable to the external AC power supply 25 (Figs. 2 and 3). The information notification block 22 is incapable of direct connection to the external AC power supply 25.

The above embodiment has the advantages described below.
(1) The information notification block 22, which includes the light emitting diode 35 serving as the notification element, is discrete from the charger body 21 and fixed to the charger body 21. The information notification block 22, which includes the auxiliary coil 33, uses the power transmitted in a non-contact manner through electromagnetic induction between the primary coil 30 of the charger body 21 and the auxiliary coil 33 as a power supply for the light emitting diode 35 to provide notification of the information. Thus, the information notification block 22, which includes the light emitting diode 35, does not require a structure for preventing the user from receiving an electrical shock (for example, a structure in which the light emitting diode 35 is arranged in a rearward part of a case). This avoids enlargement of the non-contact charger 11.
   Further, the charger body 21 (including circuits and the body case 23) may be commonly shared, for example, by a top-end model, which includes the light emitting diode 35, and a low-end model. This allows for reduction in the size of dedicated components and thereby lowers manufacturing costs.
   Particularly, in the present embodiment, the notification element is the light emitting diode 35 that notifies a user of information indicating the activation state of the charger body 21 regardless of whether or not power is being transmitted to the load device (electric toothbrush handle portion 12). This facilitates application to a product that is required to provide notification of the activation state, such as a medical product. Thus, the charger body 21 may be commonly shared by a specialty product, such as a medical product, and an ordinary product, which is not required to provide notification of the activation state. This allows for reduction in the size of dedicated components for specialty products (medical products or the like) that are manufactured in small batches and thereby lowers manufacturing costs.
(2) The body case 23 of the charger body 21 is filled with the potting resin. Thus, the charger body 21 is water resistant. Further, the charger body 21 does not include the light emitting diode 35. Thus, in comparison with when the light emitting diode is arranged in the charger body as in the prior art, a water resistant structure that prevents the user from receiving an electrical shock through a liquid is easily obtained. More specifically, when the light emitting diode is arranged in the primary side (side connected to the primary coil, namely, the charger body side), the potting resin must be filled in the charger body so as not to leak out of the case from a hole used to expose the light emitting portion of the light emitting diode. Thus, such a structure would cause difficulties in manufacturing. However, the notification element (light emitting diode 35) is arranged in the information notification block 22 and not in the charger body 21. Thus, the information notification case 32 does not accommodate potting resin that causes manufacturing difficulties together with the notification element.
(3) The information notification block 22 includes the holding socket 32c, which is for holding the electric toothbrush handle portion 12. Thus, for example, selection of a holding socket that is shaped in conformance with the load device for the information notification block 22 allows for the charger body 21 to be commonly used for different types of load devices (e.g., different models of electric toothbrush handle portions or electric razors). That is, the versatility of the charger body 21 is further increased. This further reduces manufacturing costs.
(4) The information notification case 32 includes the covers 32a and 32b, which cover at least three surfaces of the charger body 21 (body case 23) facing different directions. In the present embodiment, the covers 32a and 32b cover the front and the sides of charger body 21. This reduces non-continuous parts between the charger body 21 and the information notification block 22 and improves the aesthetic appeal. Further, regardless of the color of the charger body 21, the non-contact charger 11 may have the same color as the color of the information notification block 22 (information notification case 32). This increases the versatility of the charger body 21 and allows for improvement in the design of the non-contact charger 11.

It should be apparent to those skilled in the art that the present invention may be embodied in many other specific forms without departing from the scope of the invention. Particularly, it should be understood that the present invention may be embodied in the following forms.

In the above embodiment, as the notification element, the information notification block 22 includes the light emitting diode 35, which notifies the user of information indicating the activation state of the charger body 21. However, the notification element may be changed to another element that notifies the user of information related to the charger body 21 or the load device (electric toothbrush handle portion 12). Obviously, even in such a case, the power transmitted in a non-contact manner through electromagnetic induction between the primary coil 30 and the auxiliary coil 33 is used as a power supply for the notification element to provide notification of information.

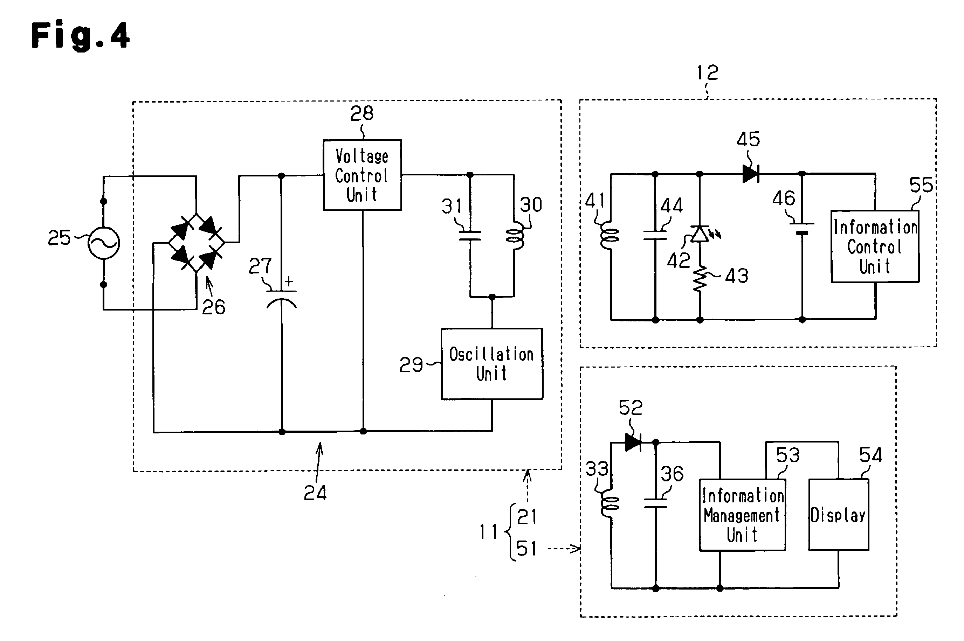

For example, referring to Fig. 4, in an information notification block 51, a rectification diode 52 is connected to one terminal of the auxiliary coil 33. Further, an information management unit 53 is arranged in lieu of the light emitting diode 35 and the resistor 34. The information management unit 53 is connected to a display 54, such as a liquid crystal display that serves as the notification element and shows various types of information. In this example (refer to Fig. 4), an information control unit 55 is connected to the rechargeable battery 46 of the electric toothbrush handle portion 12. The information control unit 55 and the information management unit 53 of the information notification block 51 are capable of communicating information through a contact or non-contact structure.

Based on the information obtained from the information control unit 55, the display 54 shows information indicating the state of charge of the rechargeable battery 46 (information indicating whether or not charging has been completed) or information indicating the usage time (replacement timing based on the usage time of consumable components, such as the toothbrush portion 47 of the electric toothbrush). Obviously, information indicating the activation state of the charger body 21 may also be simultaneously shown on the display 54. The example of Fig. 4 also arranges the notification element (display 54) in the information notification block 51 and not in the charger body 21. Thus, the information notification case does not accommodate potting resin together with the notification element.

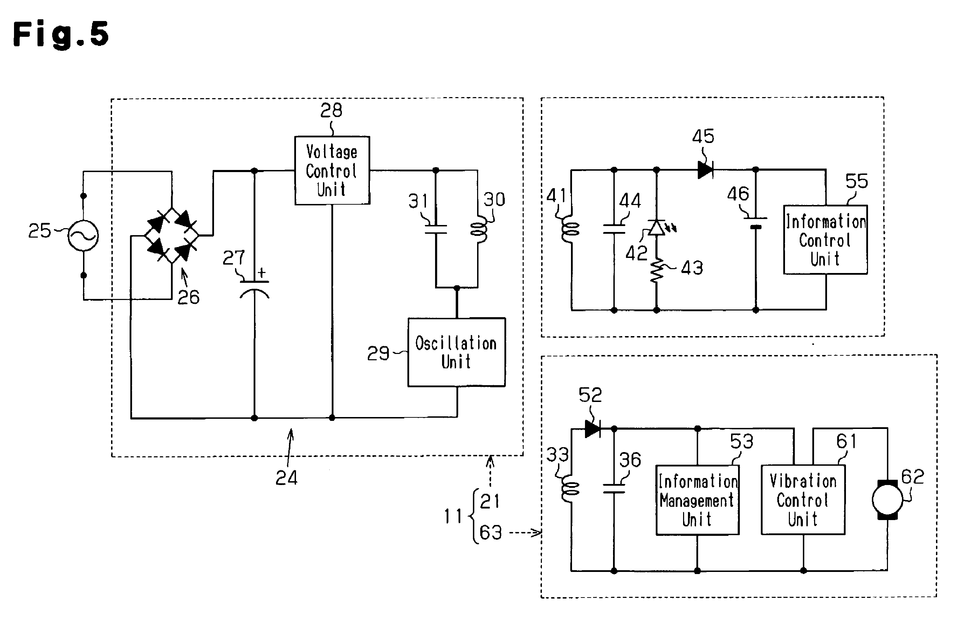

As another example, referring to Fig. 5, an information notification block 63 may replace the display 54 of the above modification (refer to Fig 4) with a vibration control unit 61 and a vibration generation motor 62, which is connected to the vibration control unit 61 and serves as the notification element. In this case, for example, the state of charge of the rechargeable battery 46 (information indicating whether or not charging has been completed) or information indicating the usage time (replacement timing based on the usage time of consumable components, such as the toothbrush portion 47 of the electric toothbrush) are notified through vibration patterns. This allows, for example, a visually impaired person to be provided with information.

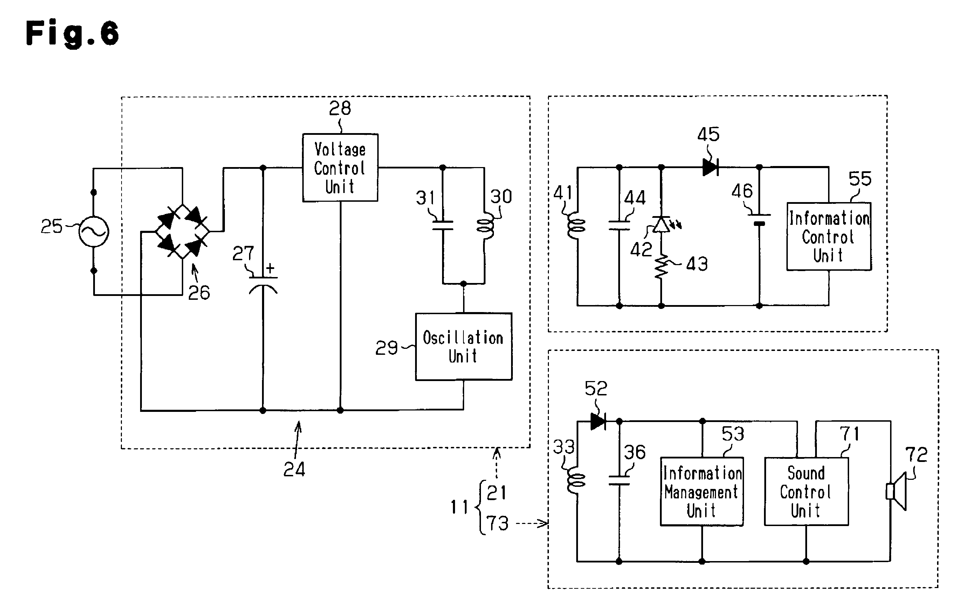

In a further example, referring to Fig. 6, an information notification block 73 may replace the display 54 of the above modification (refer to Fig 4) with a sound control unit 71 and a speaker 72, which is connected to the sound control unit 71 and serves as the notification element. In this case, for example, the state of charge of the rechargeable battery 46 (information indicating whether or not charging has been completed) or information indicating the usage time (replacement timing based on the usage time of consumable components, such as the toothbrush portion 47 of the electric toothbrush) are notified through sound patterns. This allows, for example, a visually impaired person to be provided with information.

When using the vibration generation motor or speaker in the charger body 21, the potting resin must be filled in the charger body 21 so as not to interfere with vibration or sound.
However, as shown in Figs. 5 and 6, the notification elements (motor 62 and speaker 72) are arranged in the information notification blocks 63 and 73 and not in the charger body 21. Thus, the information notification case does not accommodate potting resin together with the notification element.

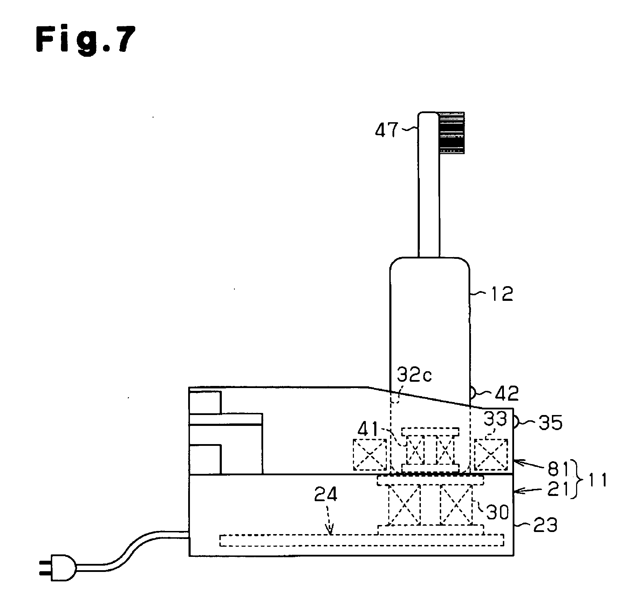

In the above embodiment, the information notification block 22 (information notification case 32) includes the covers 32a and 32b, which cover at least three surfaces of the charger body 21 (the body case 23) facing different directions, which are the front and the two sides of the charger body 21. However, the present invention is not limited in such a manner. For example, as shown in Fig. 7, an information notification block 81 (information notification case) does not include the covers 32a and 32b.

Although not particularly mentioned in the above embodiment, the information notification block 22 (information notification case 32) may be, for example, snap-fitted to the charger body 21 (body case 23) and detachably attached. In such a case, for example, the user may easily change the design (color or shape) of the information notification block 22. Further, for example, when only the notification element (light emitting diode 35) is defective, replacement of only the information notification block 22 is facilitated.

In the above embodiment, potting resin is filled into the charger body 21 so that the body case 23 is water resistant. However, a welded structure may be used to obtain the water resistance. Further, the charger body 21 does not necessarily have to be water resistant.

In the above embodiment, the information notification block 22 (information notification case 32) includes the holding socket 32c to hold the electric toothbrush handle portion 12. However, the present invention is not limited in such a manner, and a structure for holding the electric toothbrush handle portion 12 may be arranged in only the charger body 21 (body case 23), such as a cylindrical portion formed in the upper surface of the charger body 21.

In the above embodiment, the chargeable electric system is not limited to the electric toothbrush of which the load device is the electric toothbrush handle portion 12. The chargeable electric device may be an electric razor of which an electric razor handle portion serves as the load device that transmits power from a non-contact charger in a non-contact manner.

The present examples and embodiments are to be considered as illustrative and not restrictive, and the invention is not to be limited to the details given herein, but may be modified within the scope and equivalence of the appended claims.

## Claims

1. A non-contact charger comprising:
a primary coil that transmits power in a non-contact manner to a load device through electromagnetic induction performed with a secondary coil of the load device when charging the load device;
a charger body including the primary coil;
an information notification block fixed to the charger body, the information notification block including:
a notification element that notifies a user of information of at least one of the charger body and the load device; and
an auxiliary coil connected to the notification element, wherein the information notification block uses power transmitted in a non-contact manner through electromagnetic induction between the primary coil and the auxiliary coil to activate the notification element to provide notification of the information of at least one of the charger body and the load device.

2. The non-contact charger according to claim 1, wherein the information notification block is detachably attached to the charger body.

3. The non-contact charger according to claim 1, wherein the charger body is water resistant.

4. The non-contact charger according to claim 1, wherein the information notification block includes a holder that holds the load device.

5. The non-contact charger according to claim 1, wherein the information notification block includes a cover covering at least three surfaces of the charger body facing different directions.

6. The non-contact charger according to claim 1, wherein the notification element includes a light emitting element that notifies the user of information indicating an activation state of the charger body regardless of whether or not power is being transmitted to the load device.

7. The non-contact charger according to claim 1, wherein the notification element and the auxiliary coil are arranged in the information notification block that is discrete from both of the charger body and the load device.

8. The non-contact charger according to claim 8, wherein the charger body is connectable to an external AC power supply via a power cable, and the information notification block does not have a power cable electrically connectable to the external AC power supply.

9. The non-contact charger according to claim 1, wherein the information notification block has an information notification block electrical circuit, which includes the notification element and the auxiliary coil, and the information notification block electrical circuit is not connected by a conductor to either the primary coil of the charger body and the secondary coil of the load device.

10. The non-contact charger according to claim 4, wherein the holder of the information notification block holds the load device in a state in which the information notification block is fixed to the charger body.
